# EUROPEAN PATENT APPLICATION

(11) **EP 3 809 002 A1**
(43) Date of publication of application: **21.04.2021**
(21) Application number: 20202062.4
(22) Date of filing: 15.10.2020
(51) Int. Cl.: F16C 3/02

(54) **SYSTEM OF COMPOSITE VEHICLE DRIVESHAFT ASSEMBLIES WITH DIFFERENT PERFORMANCE CHARACTERISTICS**

(30) Priority: 15.10.2019 US 201962915416 P; 15.10.2019 US 201962915427 P
(71) Applicant: Composite Drivelines, LLC, West Allis, WI 53214 (US)
(72) Inventor: Dorman, James Lee, West Allis, WI 53214 (US); Lentsch, Daniel P., Milwaukee, WI 53202 (US); Piper, Gregg, Wauwatosa, WI 53226 (US); Creager, Chris, Ypsilanti, MI 48197 (US)
(74) Representative: Diehl & Partner

(57) **Abstract**

A system or a kit of multiple composite driveshaft assemblies for vehicles is provided, with the with the different composite driveshaft assemblies having different performance characteristics. The different performance characteristics of the composite driveshaft assemblies may be achieved by varying, for example, filament material(s), filament winding depth(s), and filament wind angle(s).

## Description

### CROSS-REFERENCE TO RELATED APPLICATIONS

This application claims the benefit of each of the co-pending provisional patent applications U.S. App. No. 62/915,416 filed on October 15, 2019 and entitled *"System of Composite Vehicle Driveshaft Assemblies with Different Performance Characteristics"* and U.S. App. No. 62/915,427 filed on October 15, 2019 and entitled *"Composite Vehicle Driveshaft Assembly,* " the entire contents of which are hereby expressly incorporated by reference into the present application.

### FIELD OF THE INVENTION

The invention relates generally to vehicle propel shafts or driveshaft assemblies that are made from composite materials. The invention additionally relates to a system with multiple interchangeable vehicle driveshaft assemblies that provide different performance characteristics.

### BACKGROUND OF THE INVENTION

Composite driveshafts are available, which have resulted from efforts to provide weight reduction for rotating assemblies. Such driveshafts have a long tubular section that is formed from resin-bound spiral wound filaments and end couplers in the form of metallic driveline components such yokes, flex joints etc. However, composite driveshaft assemblies have not been widely implemented for vehicle use. Designing composite driveshaft assemblies with composite tubes that connect to metallic components such as conventional vehicle driveline components presents numerous challenges.

For example, the composite tubes operate in substantially different use environments than other driveshaft applications. Vehicle driveshaft assemblies operate in heat envelopes that expose them to high operating temperatures and large temperature variations, operate at high rotational speeds and with large rotational speed variations, and experience substantial torsional loading conditions such as shock-loads and/or other extreme torque spikes, and are subject to stricter diameter and other size constraints.

Connecting the composite tubes to other driveline components such as yokes presents an especially difficult challenge. It is difficult to design and assemble joints, fittings, or adapters to transition from the composite tubes to yokes or other end couplers that can maintain connection integrity with the composite tubes while handling these operating conditions and that are also sufficiently manufacturable and economical. Since composite tubes cannot be welded, they must be bonded to the end coupler. One approach is to bond the inner surface of the end of the composite tube to an outer surface of the coupler. Bores must be provided in the tube and/or the end coupler to permit injection of an adhesive therebetween. However, drilling radial holes in the tube weakens the tube. The holes may also be prone to plugging with loose filaments, hindering or preventing the injection of adhesives.

Some performance automotive applications, such as various forms of racing or other motorsports, have environments or venues that can subject vehicles to dramatically different use conditions during different events. For example, in dirt track racing, track condition, which can be influenced by wetness of the track material, level of compaction of the track material, or the composition of the track material itself, can vary greatly between venues or between different times or sessions on the same track.

The need therefore has arisen to provide a composite driveshaft assembly having a tube securely and reliably bonded to an end yoke without unacceptably weakening the composite tube or the end yoke as well as a system for providing interchangeable composite driveshaft assemblies with different characteristics that can be selected based on track condition or other venue or environmental factors.

### SUMMARY OF THE INVENTION

In accordance with a first aspect of the invention, a system or a kit of multiple composite driveshaft assemblies for vehicles is provided. The different composite driveshaft assemblies having different performance characteristics. A particular composite driveshaft assembly may be selected and installed based on an observed or evaluated use condition of the vehicle, such as a track condition of a dirt track racing course or track. Manufacturing the different composite driveshaft assemblies with different, for example, filament material(s), filament winding depth(s), and filament wind angle(s), provides the different performance characteristics.

These and other features and aspects of the present invention will be better appreciated and understood when considered in conjunction with the following description and the accompanying drawings. It should be understood, however, that the following description, while indicating preferred embodiments of the present invention, is given by way of illustration and not of limitation. Many changes and modifications may be made within the scope of the present invention without departing from the scope of the invention.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a partially schematic side elevation view of a system of composite vehicle driveshaft assemblies with different characteristics in accordance with an aspect of the invention;
FIG. 2 is a partially schematic bottom plan view of a composite vehicle driveshaft assembly of the system of FIG. 1;
FIG. 3 is a cross-sectional side elevation view of the composite vehicle driveshaft assembly of FIG. 2;
FIG. 4 is a cross-sectional closeup view of a portion of an end coupler of FIG. 2;
FIG. 5 is a pictorial view of an end coupler of FIG. 2;
FIG. 6 is a side elevation view of the end coupler of FIG. 5;
FIG. 7 is a cross-sectional side elevation view of the end coupler of FIG. 5;
FIG. 8 is an end view of a first end of the end coupler of FIG. 5;
FIG. 9 is an end view of a second end of the end coupler of FIG. 5;
FIG. 10 is partially schematic top plan view of a portion of a first composite vehicle driveshaft assembly;
FIG. 11 is partially schematic top plan view of a portion of another composite vehicle driveshaft assembly;
FIG. 12 is partially schematic top plan view of a portion of another composite vehicle driveshaft assembly;
FIG. 13 is partially schematic top plan view of a portion of another composite vehicle driveshaft assembly;
FIG. 14 is graph representing characteristics of angle of twist as a function of laminate design of various composite vehicle driveshaft assemblies;
FIG. 15 is a graph representing characteristics of angle of twist as a function input torque of different laminate design of various composite vehicle driveshaft assemblies;
FIG. 16 is a graph representing characteristics of angle of twist for different shaft lengths and laminate designs of various composite vehicle driveshaft assemblies;
FIG. 17 is a flow diagram representing a surface preparation phase used in producing a composite vehicle driveshaft;
FIG. 18 is a flow diagram representing an assembly phase used in producing a composite vehicle driveshaft; and
FIG. 19 is a flow diagram representing a bonding phase used in producing a composite vehicle driveshaft.

Before the embodiments of the invention are explained in detail, it is to be understood that the invention is not limited in its application to the details of construction and the arrangement of the components set forth in the following description or illustrated in the drawings. The invention is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

### DETAILED DESCRIPTION OF THE PREFERRED EMBODIMENTS

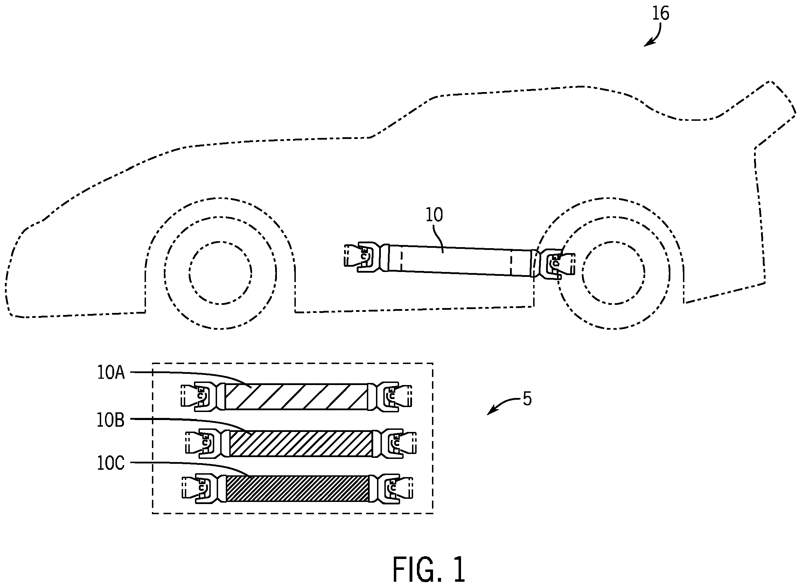

Referring now to the drawings and initially to FIG. 1, a system of composite vehicle driveshaft assemblies with different characteristics, represented as system 5, is shown with multiple composite driveshaft assemblies or composite driveshaft assemblies 10, such as composite driveshaft assemblies 10A, 10B, 10C, that have different performance characteristics, as explained in greater detail below. In the illustrated example, system 5 takes the form of kit 5 that includes multiple composite driveshaft assemblies, such as composite driveshaft assemblies 10A, 10B, 10C used with a vehicle such as an automobile 16 that, in this illustrated embodiment, is represented as a racecar 16 such as a late model dirt track racecar.

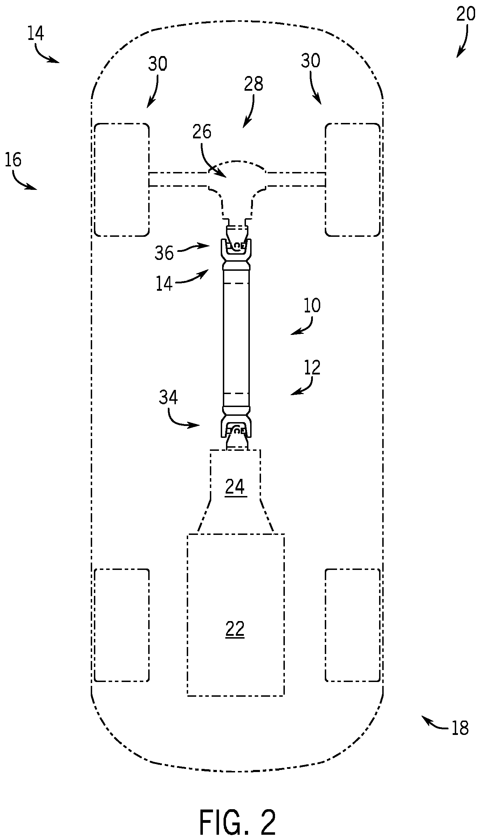

Referring now to FIG. 2, a composite vehicle driveshaft assembly 10 is illustrated as installed in a vehicle, which vehicle is represented here as an automobile 16. Automobile 16 has front and rear ends 18, 20 and a powertrain that includes a prime mover such as an engine 22. A transmission 24 receives power from the engine 22 and delivers it downstream through the composite vehicle driveshaft 10 to a differential 26 that delivers the power through a drive axle 28 to a pair of drive wheels 30. The illustrated driveshaft assembly 10 has a composite tube 40 and bondable end components 12 and 14 represented as end couplers 12 and 14 respectively connecting the driveshaft front end 34 to the transmission 24 and the driveshaft rear end 36 to the differential 26. It is understood that instead of the transmission 24 and differential 26, the composite vehicle driveshaft assembly 10 may instead transmit power from the engine 22 to a transaxle that combines a transmission and drive axle.

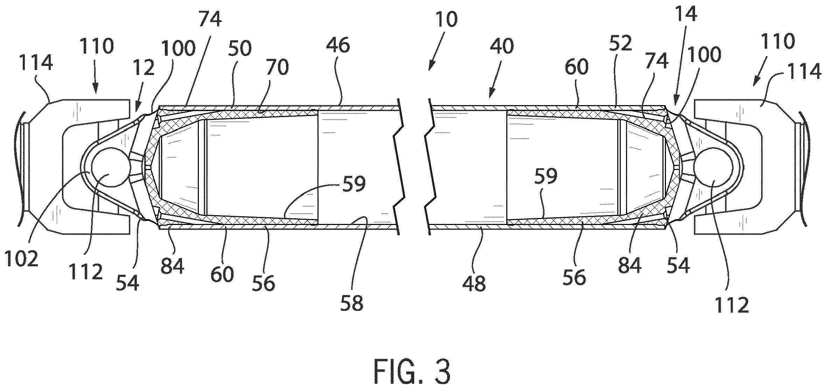

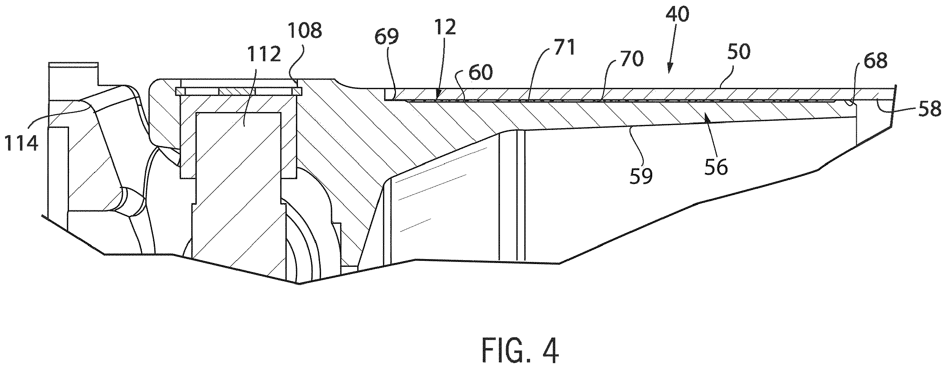

Referring now to FIGS. 3 and 4, composite vehicle driveshaft 10 includes a composite tube 40 that defines an intermediate portion of the composite vehicle driveshaft assembly 10 and that is bonded to the end components or couplers 12 and 14 at its front and back ends, respectively. Composite tube 40 may be a cylindrical hollow tube made from a composite material(s), including fibrous and resin materials components. Composite tube 40 has a body 46 with inner and outer peripheral surfaces 58 and 48 and a pair ends, shown as front and rear tube ends 50, 52. The composite tube 40 may be a product of a filament winding process. The filament winding process may include wrapping or winding a filament(s) or string(s), for example, single fiber strings that are soaked in a resin around a steel or other sufficiently rigid core or mandrel. The fibers may include, for example, carbon fiber and/or fiberglass fibers. The fiber soaking may provide a wet laminate or the fiber(s) may be pre-soaked in a resin to provide what is sometimes referred to in the industry as "pre-prig materials". Regardless of the particular fiber soaking procedure, after the filament winding process, the wound filament(s) or wound tubular product is then oven-heat cured.

Tube lengths, diameters, and thicknesses may vary from application to application and with designer preference, with thinner tubes typically being used for shorter driveshafts and thicker tubes being used for longer driveshafts. Tube lengths of 10" to 70" (254 mm to 1780 mm) are typical for automotive driveshaft application. Tube inner diameters may vary from about 2.5" to 5" (65 mm to 125 mm). Tube thicknesses may vary from about 0.125" to 0.155" (31.75 mm to 39.37 mm), with thicker tubes being more typical for longer driveshafts. Tube diameter for automotive applications typically will be 2.5" (63.5 mm), 3" (76.2 mm), or 3.5" (88.9 mm), depending on the specific application.

Regardless of the particular configuration of composite tube 40, composite tube 40 has input and output ends, represented here as front and rear tube ends 50, 52 that are bonded to the end couplers 12, 14. The bonding may connect components made of dissimilar materials to each other. This allows a non-metallic component, such as the composite tube 40, to provide a substantial or a majority portion of the length of the composite vehicle driveshaft 10 while also providing metallic component connections through the joints at the interfaces between the driveshaft front and rear ends 34, 36 and the transmission 24 and differential 28.

Still referring to FIG. 3, at least one, and both in the illustrated example, of the end components or couplers 12 and 14 take the form of yokes bonded to the ends of the composite tube 40. Though two identical yokes are illustrated, it should be understood that one of the yokes could be replaced by a different yoke or by a different end component or end coupler or end joints such as a flex coupler, CV (constant-velocity) coupler, a slip yoke or other splined coupler. The following description of end component 12 or yoke 12 therefore applies equally to end component 14 or yoke 14.

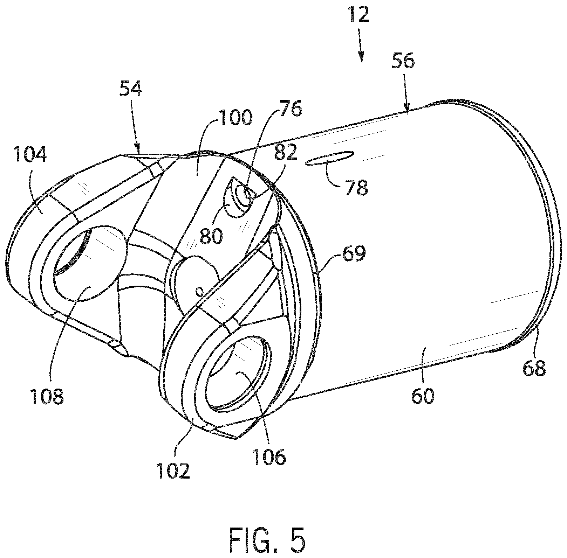

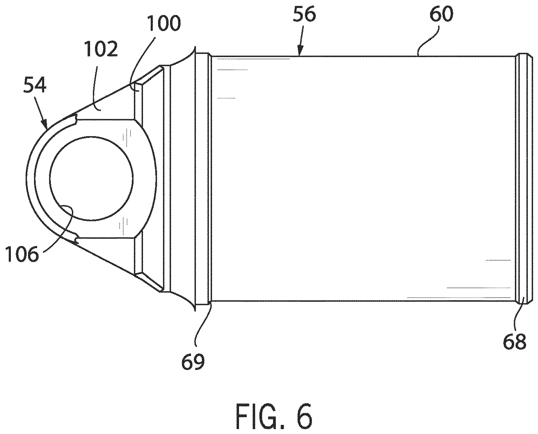

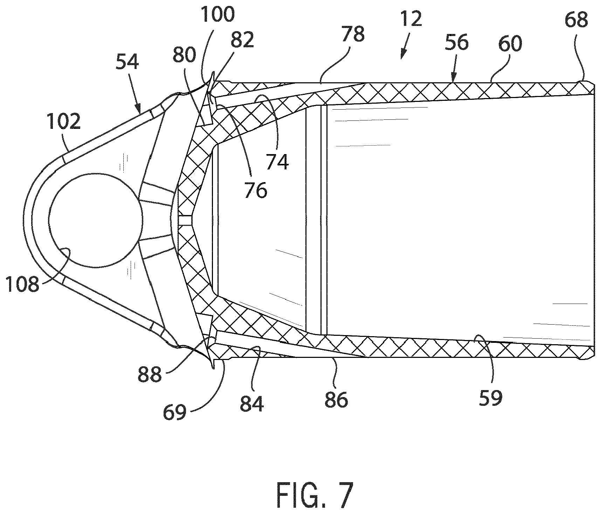

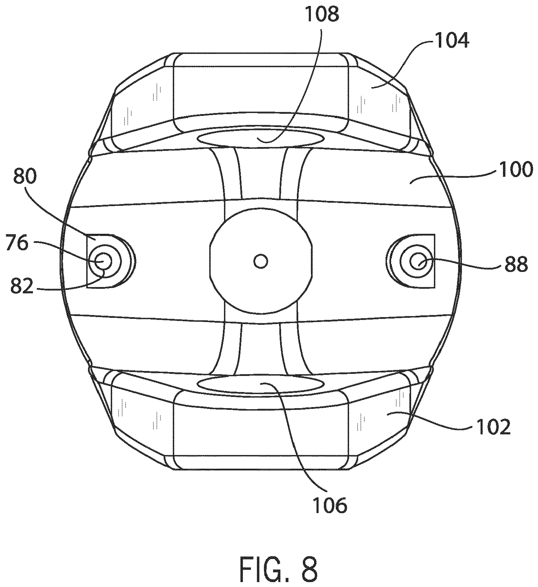

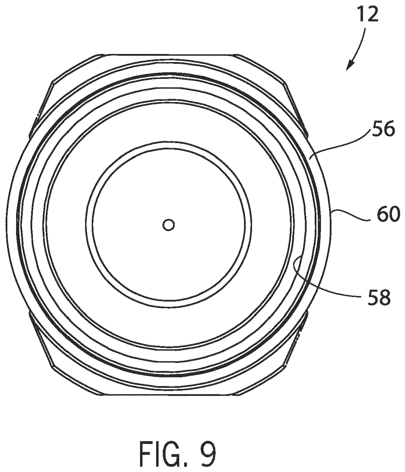

Referring to FIGS. 3-9 yoke 12 is connected to (and technically forms part of) a universal joint 110. Yoke 12 has an outer coupler 54 and an inner tubular sleeve 56 formed from a single metal casting, typically aluminum or steel. The outer coupler 54 has a crown 100 and first and second opposed arms 102 and 104 extending axially outwardly from the crown 100. The arms 102 and 104 have through-bores 106 and 108 for connection to a trunnion 112 of a universal joint 110 as shown. The trunnion 112 and corresponding bearings (not shown) connect the arms 102 and 104 of yoke 12 to an outer yoke 114, which in turn is coupled to another driveline component. Alternatively, the arms 102, 104 could be replaced by or supplemented with connectors for attachment to other driveline joints such as a flex joint or a constant velocity (CV) joint.

Referring to FIGS. 3 and 5-9, the sleeve 56 has inner and outer peripheral surfaces 59 and 60. The sleeve 56 fit concentrically in the front tube end 50 of tube 40 so that the inner peripheral surface 58 of the composite tube 40 faces toward an outer peripheral surface 60 of the sleeve 56, with the portion of the sleeve 56 that inserts into and is concentrically held in the tube 40 defining an inserted section. Sleeve 56 may be aluminum or made from a ferrous metal such as steel. As best seen in FIG. 3, a cavity 70 is formed between the inner surface 58 of the composite tube 40 and the outer surface 60 of the sleeve 56 for receiving adhesive. Cavity 70 is sealed at its axial ends by structures extending radially between the sleeve 56 and the composite tube 40. In the illustrated embodiment, these structures take the form of inner and outer lands 68 and 69 that extend radially outward from the outer circumferential surface 60 of the sleeve 56 to the inner peripheral surface of the composite tube 40, with the lands 68 and 69 being longitudinally spaced from each other along the sleeve 56. Each of the respective outer and inner circumferential surfaces of the yoke 12 and tube 40 at the cavity 70 (e.g., between the lands 68, 69) defines a corresponding bond area. The lands 68 and 69 engage the inner peripheral surface 58 of the composite tube 40 through a snug fit, which may be an interference fit that requires press-assembly. Such a fit ensures concentricity of the sleeve 56 within the composite tube 40 by coaxially locating the sleeve 56 within the composite tube 40 in a manner that prevents radial offset or angular tilting of the sleeve 56 with respect to a longitudinal axis of the tube 40.

Cavity 70 is filled with an adhesive (not shown) to bond the sleeve 56 to the composite tube 40. The adhesive may be any of a variety of industrial, aerospace, or other suitable adhesives, epoxies, or other bonding agents, such as a suitable methacrylate adhesive or various one available from 3M® under Scotch-Weld™ and various other tradenames. The bond between the sleeve 56 and the composite tube 40 may allow for suitable automotive applications and other high torque applications, including high performance vehicle applications that require driveshafts with high torque capacities. The bonding strength between the sleeve 56 and the composite tube 40 may provide torque capacities within a range of at least about 300 lb./ft of torque capacity up to about 35,000 lb./ft of torque capacity of the composite vehicle driveshaft 10 without bond failure between the sleeve 56 and the composite tube 40.

Referring to FIGS. 3, 5, 7, and 8, at least one port, bore, or adhesive injection passage 74 is provided in the yoke 12 for the injection of the adhesive into the cavity 70 during an adhesive injection procedure. The adhesive injection passage 74 is shown here with an adhesive inlet 76 located axially beyond the end of the composite tube 40 and an adhesive outlet 78 opening into the cavity 70. For a 90 mm outside diameter sleeve, the passage may be between 2 mm and 7 mm in diameter and, more typically, is 4 mm in diameter. The passage 74 extends linearly at an acute angle relative to the axial centerline of the composite driveshaft assembly 10 from an inlet 76 formed in an axial end surface of the yoke 12 to an outlet 78 formed in the outer peripheral surface of the sleeve 56 within the cavity 70. The slope of the angle may vary from application to application. Ideally, it should be as shallow as practical so as to maximize the area of the elliptical outlet 78 without unacceptably weakening the yoke by removing too much material in aggregate or in the vicinity of a given surface or, in the alternative, having to undesirably add additional mass to the yoke to accommodate the shallow passage. Angles of 5 degrees to 20 degrees are typical, with angles of about 10-15 degrees being the most typical. The illustrated passage 74 extends at an angle of 10 degrees and is 30 mm long.

The location of the inlet 76 on the crown 100 of the yoke 12 negates the need to drill into the composite tube 40. Inlet 76 is located on the crown 100 about mid-way between the arms 102 and 104. The inlet 76 may be stepped or otherwise shaped to mate with a dispensing nozzle of a given size and shape to inhibit or prevent adhesive leakage past the perimeter of the fill nozzle. In the illustrated embodiment, the inlet 76 includes an outer cylindrical counterbore 80 and an inner frustoconical countersink 82 connecting the counterbore 80 to the interior of the passage 74.

As mentioned above, the outlet 78 of passage 74 is elliptical or ovoid rather than circular, despite the fact that the passage 74 is circular, due to the fact that the passage 74 intersects the outer peripheral surface 60 of the sleeve 56 at an acute angle rather than perpendicularly. The outlet 78 thus has a relatively large surface area and axial extent when compared to those of a circular outlet, facilitating the flooding of the cavity 70 when adhesive is injected through the passage 74 from the inlet 76. In the present example in which the passage has a diameter of 4 mm and extends at an angle of 10 degrees, the outlet 78 has an area of about 80 mm², significantly larger than the 12.5 mm² opening that would be formed from a circular outlet.

Still referring to FIGS. 3, 7, and 8, a second, bleed passage 84 is formed in yoke 12 at a location that is spaced peripherally from the injection passage 74. Bleed passage 84 is configured to vent or release air from cavity 70 during the adhesive injection procedure. The bleed passage 84 is most effective when spaced 180 degrees from the injection passage 74, though spacings of considerably fewer and/or additional bleed passages 84 are certainly possible. The bleed passage 84 extends linearly at an acute angle relative to the axial centerline of the composite shaft assembly 10 from an inlet 86 formed in the outer peripheral surface 60 of the sleeve 56 within the cavity 70 to a port or passage that may take the form of an outlet 88 formed in an axial end surface of the crown 100 of the yoke 12. This angle may be within the same range relative to the axial as the angle of the injection passage 74 and, most typically, will be the same as the angle of the injection passage 74, i.e., between 5 degrees and 20 degrees and most typically of about 10-15 degrees. The location of the outlet 88 on the crown 100 of the yoke 12 negates the need to drill into the composite tube 40. The outlet 88 is shown as being counterbored and countersunk such that, if desired, the passage 84 could be used as the injection passage, in which case the passage 74 could function as the bleed passage. Stated another way, the passages 74 and 84 and their respective segments, such as ports or inlets 76 and outlets 88 function interchangeably.

Alternatively, or instead of this arrangement, two or more opposed bleed passages could be provided that are each spaced in opposite directions about 150° to 175° from the adhesive injection passage 74.

Referring again to FIGS. 1 and 2, regardless of the particular adhesive injection bore configuration or the particular type(s) of driveline implemented on the composite driveshaft assembly 10, the different composite driveshaft assemblies 10A, 10B, 10C of kit 5 have different performance characteristics. Examples of performance characteristics may include torsional-related characteristics such as torsional strength or max shear stress, with the different composite driveshaft assemblies 10A, 10B, 10C having different torsional stiffnesses or resistances to twist.

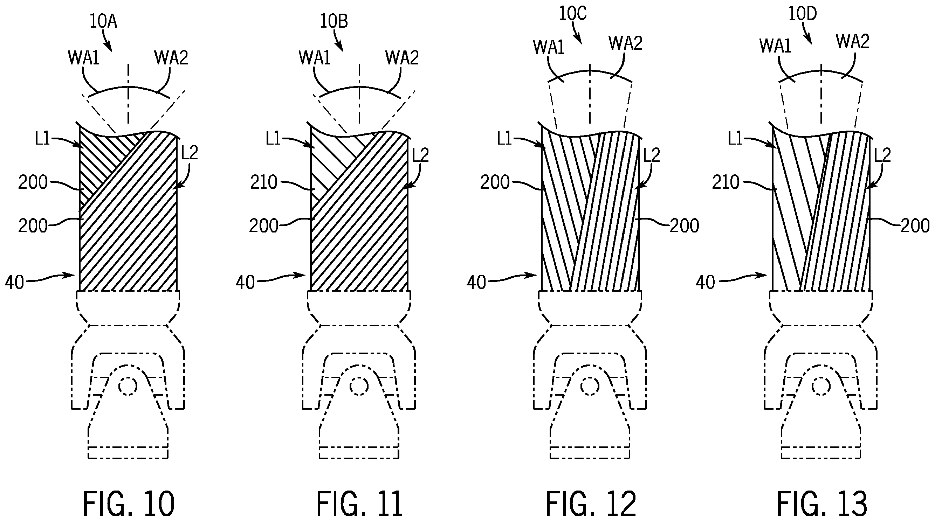

Referring now to FIGS. 10-13, four different composite driveshaft assemblies 10A, 10B, 10C, 10D are illustrated as examples of different configurations with different performance characteristics, such as torsional stiffness, that may be usable together as kit 5 (FIG. 1) to allow a user to select a particular composite driveshaft assembly 10 based on the venue or other environmental conditions. The different performance characteristics are achieved in the production of the different composite driveshaft assemblies 10A, 10B, 10C, 10D. Providing the composite driveshaft assemblies 10A, 10B, 10C, 10D with different materials, sidewall thicknesses, and filament wind angles provides different torsional stiffness or other performance characteristics. Each of the composite driveshaft assemblies 10A, 10B, 10C, 10D is shown with two layers L1, L2 of wound filaments that define the tube 40 sidewall, although it is understood that each tube 40 may have substantially more layers, such as up to about 20 layers, depending on the overall desired operational characteristics. Tubes 40 of composite driveshaft assemblies 10A, 10C in FIGS. 10 and 12 are shown with a single type of material, represented as filament(s) 200, wound at the same angle but in opposite directions in the two layers L1, L2. Tubes 40 of composite driveshaft assemblies 10B, 10D in FIGS. 11 and 13 are shown with two types of material, represented as filaments 200 and 210, wound at the same angle but in opposite directions in the two layers L1, L2, provide positive and negative wind angles. The layers may provide different filament wind thicknesses, based on the thickness of the filament or stack of filaments that may define the layer with a common wind angle. As mentioned above, filaments 200, 210 may be, for example, single fiber strings such as carbon fiber and/or fiberglass fibers soaked in a resin. Wind angles WA1, WA2 may be defined by an angle between filaments 200, 210 at a respective layer L1, L2 and a longitudinal axis of the tube 40. Wind angles WA1, WA2 in FIGS. 10 and 11 are shown to have larger angles than those shown in FIGS. 12 and 13 relative to the sleeve's 56 longitudinal axis. Larger angles, such as those of FIGS. 10 and 11, will generally provide a stronger or stiffer shaft that twists less under a given torsional load than smaller angles, such as those of FIGS. 12 and 13, with other variables being held constant. That is because filaments 200, 210 of tube 40 tend to exhibit their greatest strength in tension with far less strength in sheer and a nominal strength in compression, whereby tuning of torsional stiffness can be achieved at least in part by adjusting the wind angles, with larger angles relative to a longitudinal axis of the tube 40 providing greater torsional strength. Selecting materials for filaments 200, 210 with different strength moduli also influences torsional strength of tube 40, with material that has a higher modulus providing a stiffer tube 40 that a material with a lower modulus. By selecting the material(s), sidewall thickness, which may be a function of the number of layers of tube 40 (assuming a given filament diameter), and filament wind angles, composite driveshaft assemblies can be consistently produced to achieve desired substantially discrete angles of twist in reaction to a given load within a range of about 3-degrees to 40 degrees, more typically in a range of about 5-degrees to 30-degrees, and most typically in a range of about 7-degrees to 25-degrees. This is typically done by varying the wind angles of the filaments between a range of about 7-degrees to 60-degrees, more typically in a range of about 10-degrees to 50 degrees, and most typically in a range of about 15-degrees to 45-degrees to achieve a target amount of twist in reaction to a given load. Tuning the composite tube 40 to achieve a particular stiffness, torsional rigidity, and/or other characteristic is done by selecting and/or varying the wind angles as well as varying the laminate sequence of layers within tube 40.

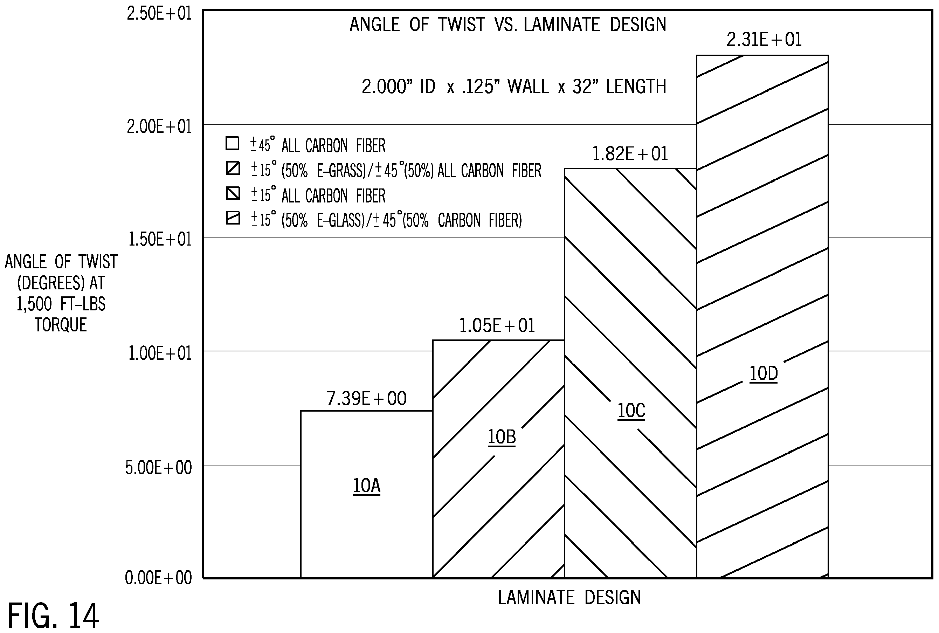

Referring now to FIG. 14, this graph shows examples of different performance characteristics of different composite driveshaft assemblies 10A, 10B, 10C, 10D of kit 5. The performance characteristic(s) represented in this example is torsional stiffness as measured in terms of angle of twist experienced by the composite driveshaft assemblies 10A, 10B, 10C, 10D under the same torque application, as labeled on the Y-axis. This example shows the strongest or stiffest driveshaft assembly is composite driveshaft assembly 10A, which experienced an angle of twist of about 7.4-degrees when subjected to a 1,500 lb./ft. torque. The composite driveshaft assembly 10A was made from a single material for the filament(s) 200 (FIGS. 10-13), carbon fiber, and wound at an angle(s) of ± 45-degrees. The second strongest or stiffest driveshaft assembly in this example is composite driveshaft assembly 10B, which experienced an angle of twist of about 10.5-degrees when subjected to the 1,500 lb./ft. torque. The composite driveshaft assembly 10B was also made from a single material for the filament(s) 200 (FIGS. 10-13), carbon fiber, but the filaments were wound at two different angles of ± 15-degrees and ± 45-degrees. The third strongest or stiffest driveshaft assembly in this example is composite driveshaft assembly 10C, which experienced an angle of twist of about 18.2-degrees when subjected to the 1,500 lb./ft. torque. The composite driveshaft assembly 10C was also made from a single material for the filament(s) 200 (FIGS. 10-13), carbon fiber, but the filaments were wound at a single, less steep, angle of ± 15-degrees. The least strong / stiff or most flexible driveshaft assembly in this example is composite driveshaft assembly 10D, which experienced an angle of twist of about 23.1-degrees when subjected to the 1,500 lb./ft. torque. The composite driveshaft assembly 10D was made from two materials 200, 210 (FIGS. 10-13), fiberglass and carbon fiber, and the filaments were wound at two different angles of ± 15-degrees (fiberglass) and ± 45-degrees (carbon fiber).

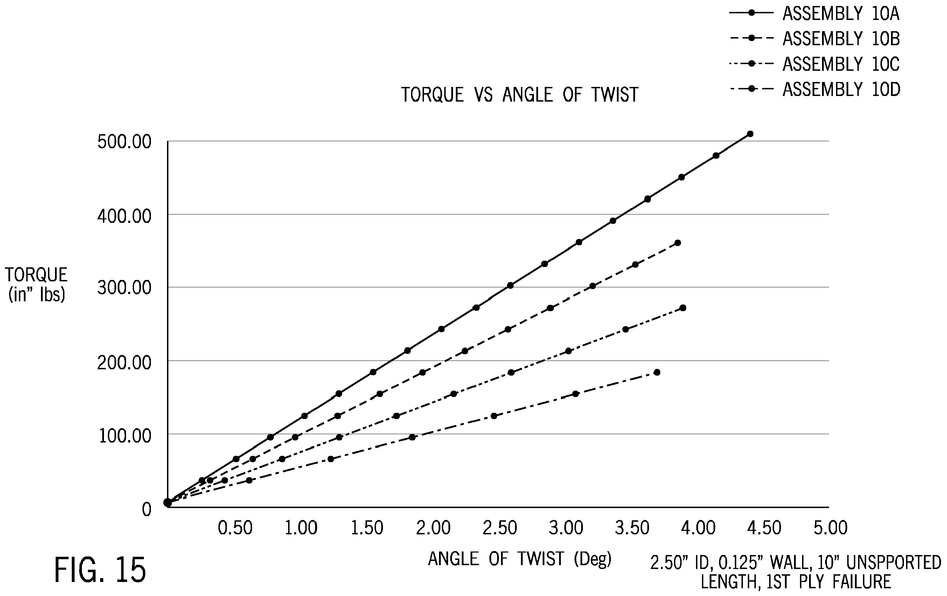

Referring now to FIGS. 15-16 these graphs show other examples of different performance characteristics of different composite driveshaft assemblies 10A, 10B, 10C, 10D of kit 5. Referring now to FIG. 15, the performance characteristic(s) represented in this example also relates to torsional stiffness as measured in terms of angle of twist experienced by each of the composite driveshaft assemblies 10A, 10B, 10C, 10D, as labeled on the X-axis, under different input torque applications, as labeled on the Y-axis. Each of the composite driveshaft assemblies 10A, 10B, 10C, 10D was tested as a 10 inch (254 mm) length, 2.5 inch (63.5 mm) ID with a sidewall thickness of .125 inch (3.175 mm) that was unsupported between its ends. Inputs torques were applied, for example, from a resting state, and the angle of twist was measured until a failure of at least one ply of the respective composite driveshaft assemblies 10A, 10B, 10C, 10D was observed. The composite driveshaft assembly 10A of this embodiment was made from a single carbon fiber material for the filament 200 (FIGS. 10-13) and the filaments were wound at two different angles of ± 15-degrees and ± 45-degrees. Composite driveshaft assembly 10A was the stiffest or required the greatest amount of load to twist to a particular amount or angle of twist. Like composite driveshaft assembly 10A, the composite driveshaft assembly 10B is also made from a single carbon fiber material for the filament 200 (FIGS. 10-13) and the filaments were wound at two different angles of ± 15-degrees and ± 45-degrees. However, more of the filament 200 in composite driveshaft assembly 10B was wound with a wind angle of 15-degrees than was in driveshaft assembly 10A. Composite driveshaft assembly 10B required the second greatest amount of load to twist to a particular amount or angle of twist. The composite driveshaft assembly 10C of this example was made from two materials, fiberglass and carbon fiber, and the filaments 200 (FIGS. 10-13) were wound at two different angles of ± 15-degrees and ± 45-degrees. Composite driveshaft assembly 10C required the second least amount of load to twist to a particular amount or angle of twist. The composite driveshaft assembly 10D of this example was made from a single carbon fiber material for the filament 200 (FIGS. 10-13) wound at a single wind angle of ± 15-degrees. Composite driveshaft assembly 10D was the least stiff or required the least amount of load to twist to a particular amount or angle of twist. Table 1 shows data that underlies the graph of Torque versus Angle of Twist, represented in FIG. 15.

**TABLE 1**

| Torque Vs Angle Graphs - 10" Unsupported Tube | | | | |
|---|---|---|---|---|
| Tq (in*lbs) | Angle of Twist (Deg) of Driveshaft Assembly | | | |
| | 10A (driveshaft assembly) | 10B (driveshaft assembly) | 10C (driveshaft assembly) | 10D (driveshaft assembly) |
| 0 | | | | |
| 3000 | 0.26 | 0.32 | 0.43 | 0.61 |
| 6000 | 0.51 | 0.63 | 0.86 | 1.22 |
| 9000 | 0.77 | 0.95 | 1.28 | 1.83 |
| 12000 | 1.02 | 1.27 | 1.71 | 2.44 |
| 15000 | 1.28 | 1.59 | 2.14 | 3.05 |
| 18000 | 1.53 | 1.90 | 2.57 | 3.66 |
| 21000 | 1.79 | 2.22 | 3.00 | 4.26 |
| 24000 | 2.05 | 2.54 | 3.43 | |
| 27000 | 2.30 | 2.85 | 3.85 | |
| 30000 | 2.56 | 3.17 | 4.28 | |
| 33000 | 2.81 | 3.49 | | |
| 36000 | 3.07 | 3.80 | | |
| 39000 | 3.32 | 4.12 | | |
| 42000 | 3.58 | 4.44 | | |
| 45000 | 3.84 | | | |
| 48000 | 4.09 | | | |
| 51000 | 4.35 | | | |

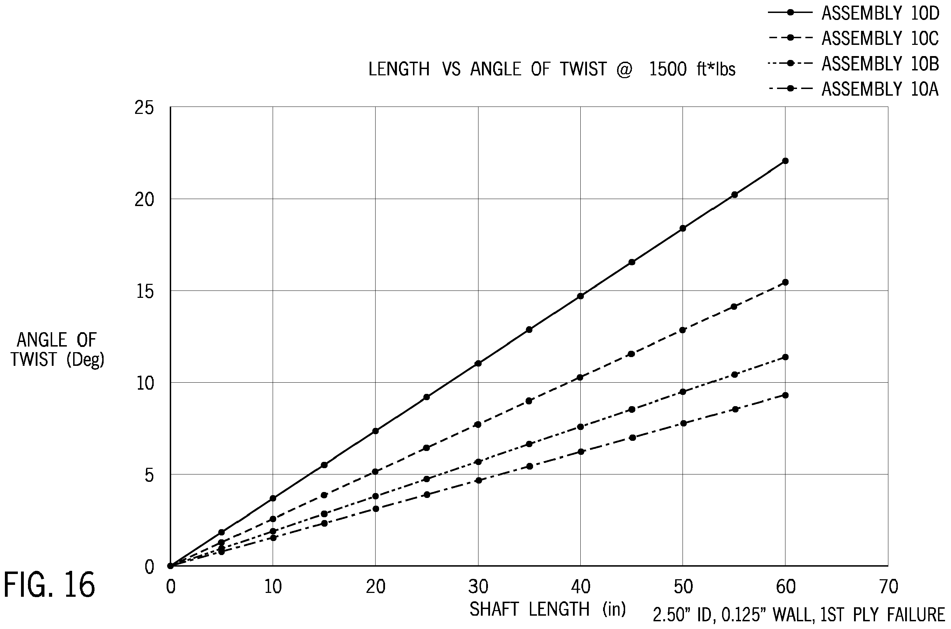

Referring now to FIG. 16, the performance characteristic(s) represented in this example also relates to torsional stiffness as measured in terms of angle of twist, as labeled on the Y-axis, experienced by each of the composite driveshaft assemblies 10A, 10B, 10C, 10D of different lengths ,as labeled on the X-axis for the same input torque of 1,500 ft*Lbs. Similar to the composite driveshaft assemblies 10A, 10B, 10C, 10D of FIG. 15, those of FIG. 16 were tested until failure and have 2.5 inch (63.5 mm) IDs with sidewall thicknesses of .125 inch (3.175 mm). Also similar to the results shown in FIG. 15, the results illustrated in FIG. 16 show that the driveshaft assembly 10A exhibits the greatest torsional rigidity or twists the least at each of the different shaft lengths under a common input load. The second greatest torsional rigidity or twist-resistant is driveshaft assembly 10B. Driveshaft assembly 10C twisted the second-most under the common input load and driveshaft assembly 10D twisted the most. Table 2 shows data that underlies the graph of Length versus Angle of Twist as represented in FIG. 16.

**TABLE2**

| Angle of Twist Vs Length @ 1500 ft*lbs Torque | | | | | | | |
|---|---|---|---|---|---|---|---|
| 10A (driveshaft assembly) | | 10B (driveshaft assembly) | | 10C (driveshaft assembly) | | 10D (driveshaft assembly) | |
| Angle of Twist (Degrees) | Length (Inches) | Angle of Twist (Degrees) | Length (Inches) | Angle of Twist (Degrees) | Length (Inches) | Angle of Twist (Degrees) | Length (Inches) |
| - | 0 | - | 0 | - | 0 | - | 0 |
| 0.77 | 5 | 0.95 | 5 | 1.28 | 5 | 1.83 | 5 |
| 1.53 | 10 | 1.90 | 10 | 2.57 | 10 | 3.66 | 10 |
| 2.30 | 15 | 2.85 | 15 | 3.85 | 15 | 5.48 | 15 |
| 3.07 | 20 | 3.80 | 20 | 5.14 | 20 | 7.31 | 20 |
| 3.84 | 25 | 4.76 | 25 | 6.42 | 25 | 9.14 | 25 |
| 4.60 | 30 | 5.71 | 30 | 7.71 | 30 | 10.97 | 30 |
| 5.37 | 35 | 6.66 | 35 | 8.99 | 35 | 12.79 | 35 |
| 6.14 | 40 | 7.61 | 40 | 10.28 | 40 | 14.62 | 40 |
| 6.90 | 45 | 8.56 | 45 | 11.56 | 45 | 16.45 | 45 |
| 7.67 | 50 | 9.51 | 50 | 12.85 | 50 | 18.28 | 50 |
| 8.44 | 55 | 10.46 | 55 | 14.13 | 55 | 20.11 | 55 |
| 9.21 | 60 | 11.41 | 60 | 15.42 | 60 | 21.93 | 60 |

Referring again to FIGS. 10-13, it is understood that the different composite driveshaft assemblies 10A, 10B, 10C, 10D with the different performance characteristics may be configured to be easily visually distinguishable. Examples include using different easily visually distinguishable colors or different easily visually distinguishable printed patterns at the outer surface of the different composite driveshaft assemblies 10A, 10B, 10C, 10D to facilitate quick and easy selection of an appropriate composite driveshaft assemblies 10A, 10B, 10C, 10D for a particular use condition.

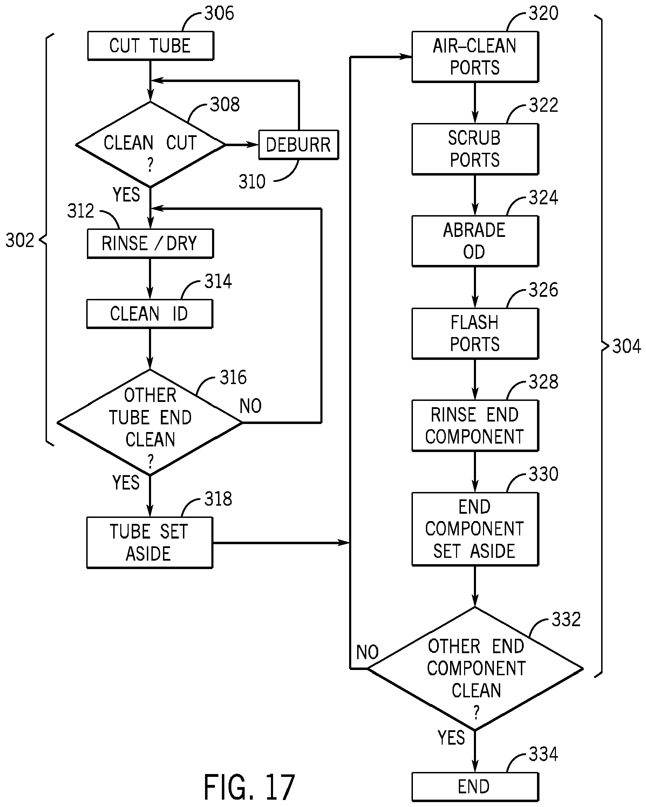

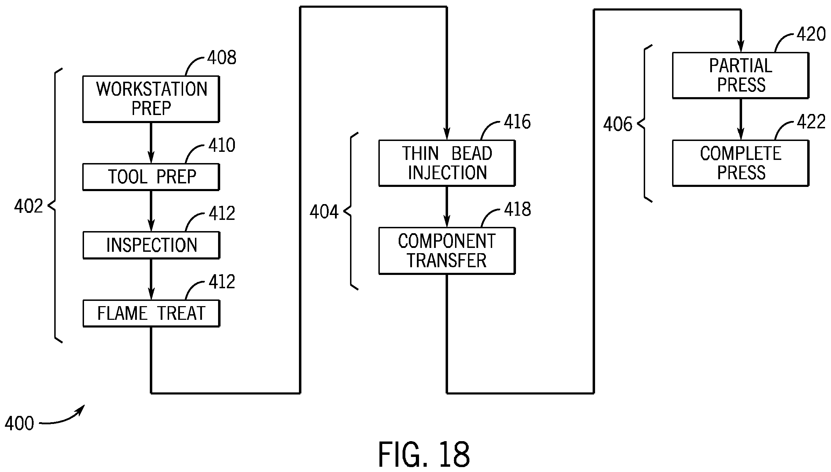

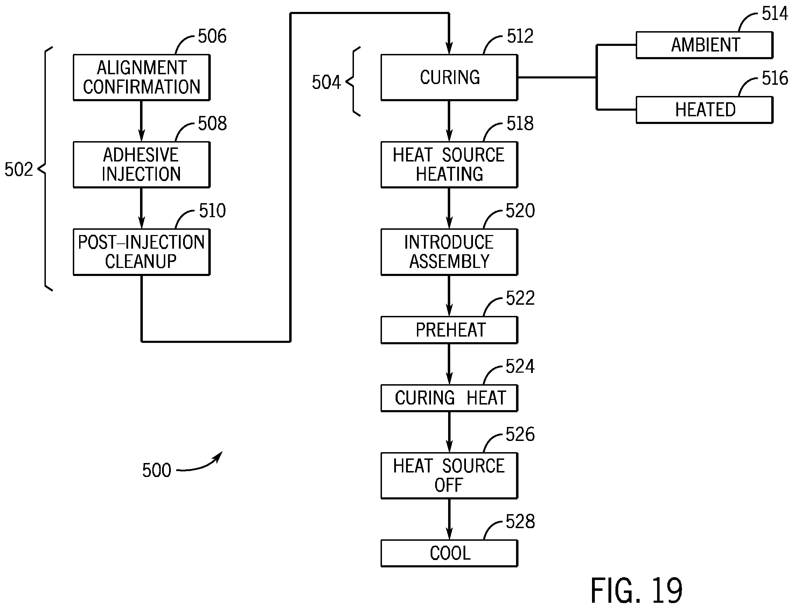

Referring now to FIGS. 17-19, regardless of the particular adhesive injection bore configuration or the particular type(s) of driveline joints implemented on the composite driveshaft assembly 10, the driveshaft assembly 10 is typically assembled by way of a build procedure with multiple phases, represented as surface preparation phase 300 in FIG. 17, assembly phase 400 in FIG. 18, and bonding phase 500 in FIG. 19. Before beginning the multi-phase build procedure, general workstation preparation is performed. This includes, for example, preparing a build area of the workstation for the multi-phase build procedure by cleaning the build area thoroughly to ensure that any work surfaces that will be used are completely free of oils and debris, whereby debris and oils cannot be seen or felt. If compressed air is using in any of the phases of the multi-phase build procedure, then a user should ensure that the compressed air system that feeds the workstation has an air dryer and filtration system and that such a system is operational to ensure that the compressed air is free of oil and water.

Referring now to FIG. 17, surface preparation phase 300 includes is represented as at least two stages, shown as tube surface preparation 302 and end component surface preparation 304. During tube surface preparation 302, composite tube 40 is cut to length based on the requirements for a particular driveshaft 10 being built, with an appropriate blade, as represented at process block 306. Typically, a rotary-style or other wet saw is used to reduce dust while cutting the composite tube 40. At decision block 308, the cut end of composite tube 40 is inspected for a cleanliness of cut, which should be free of visible burrs or protruding fibers. As represented at process block 310, if present after cutting, burrs or protruding fibers are removed from the end using an appropriate tool such as a file, an abrasive cloth such as an emery cloth, or an abrasive pad such as various ones available from 3M® under Scotch-Brite™ and various other tradenames. If the cut end of composite tube 40 is free of burrs or protruding fibers, then the composite tube's 40 inner circumferential surface or ID (inside diameter) is rinsed, as represented by process block 312. Water is typically used during rinsing to remove any residual carbon dust from the cutting operation. Clean shop towels or the like are typically passed through the composite tube 40 to dry and wipe debris from inside the composite tube 40. The clean shop towel(s) is passed through the bore of the composite tube 40 until minimal debris from the composite tube 40 is found on the shop towel(s). As represented at process block 314, the composite tube's 40 ID is cleaned with a degreaser or solvent, which is typically acetone, for example, applied with a clean cloth such as a new, clean, no-lint shop towel that is wetted with acetone from a plunger can. The ID of the end of composite tube 40 is wiped with the acetone-wetted towel to thoroughly clean the full bond area or the length of the composite tube's 40 ID in which the end component 12, 14 is inserted. Wiping in this manner is repeated, typically with a fresh or new, clean, no-lint shop towel or other appropriate cloth with each of the wipe downs. The cloth is repositioned or replaced during the repeated wiping process until cloth remains clean after wiping. Typically, several (such as three or more) wiping cycles are required removal liquid or solid particle contamination from storage, shipping, and cutting dust and debris. After sufficient cleaning with the wiping cycles, the cloth should be completely free of any visible carbon dust and there should be no visible towel or other cloth lint inside the composite tube 40. As represented at decision block 316, if the other end of composite tube 40 has not yet been cleaned, then the process repeats of rinsing, drying, and cleaning at process blocks 312, 314 for that other end. As represented at process block 318, after the bond areas in both ends 50, 52 of composite tube 40 are cleaned, the composite tube 40 is set aside during the end component surface preparation 304. Setting the composite tube 40 is side is done without touching the inside of the composite tube's ends 50, 52 or otherwise posing contamination risks to the cleaned surface(s). Typically, this is done by moving the composite tube 42 its set aside location by handling only its outer circumferential surface and covering its open ends with a lint-free cloth such as a no-lint shop towel.

Still referring to FIG. 17, during the surface preparation of the bondable end component 12, 14, as represented by process block 320, the end component ports are pneumatically cleared. This is typically done with an aerosol-type canned air product, such as those used for removing dust from electronic components. Other dry and clean compressed air, such as filtered, dry, oil-free, shop air or the like, may also be used. The pneumatic clearing of ports removes, e.g., machining chips, cutting fluid, or other contamination in the injection holes or ports that may have accumulated during the manufacturing process or shipping/storage. As represented at process block 322, the ports are mechanically cleaned, for example, by scrubbing. This is typically done with a pipe cleaner that is sized to apply sufficient wiping engagement and resistance to push through the port while mechanically removing solid debris. As represented at process block 324, the end component's outer circumferential surface or OD (outside diameter) is scuffed or mechanically cleaned. This is typically done by abrading the OD of the inserted section (including the bond area and lands 68, 69) of the end component 12, 14 with a Scotch-Brite™ pad or other suitable abrasive pad. At process blocks 326 and 328, the ports are flushed and the inserted section of the end component 12, 14 is thoroughly rinsed. Both the port flushing and inserted section rinsing is typically done with a degreaser or solvent and more typically with acetone delivered from, for example, an acetone delivery bottle, which is typically a squeeze-type bottle. As represented at process block 330, after the end component's inserted section has been cleaned, the end component 12, 14 is set aside for further processing, such as assembly. Setting aside the end component 12, 14 typically includes placing it at a clean location in the workstation, without touching the inserted section or exposing it to potential contact with any foreign material. During the set aside of the end component 12, 14, if the inserted section is touched or contacts any foreign material, then the process of clearing, scrubbing, abrading, flushing, and rinsing at process blocks 320, 322, 324, 326, 328 is repeated. At decision block 332 if the other end component 12, 14 has not yet been cleaned, then the process repeats of clearing, scrubbing, abrading, flushing, and rinsing at process blocks 320, 322, 324, 326, 328 for such other end component 12, 14. When both end components are cleaned and set aside, the surface preparation phase 300 is complete, as represented at process block 334.

Referring now to FIG. 18, assembly phase 400 is typically performed within 30 minutes and, more typically, within 15 minutes of the surface preparation phase 300 (FIG. 17). Assembly phase 400 is represented as at least three stages, shown as assembly preparation 402, preliminary lubrication 404, and pressing 406. Assembly preparation 402 includes workstation preparation, tool preparation, inspection, and flame treatment, respectively represented at process blocks 408, 410, 412, 414. During workstation preparation at block 408, acetone, shop towels, and/or other flammable materials are moved far away, for example, at least 10 feet, from the work surface and surrounding area. During tool preparation at block 410, an adhesive-delivery gun, such as a pneumatic, electric, or manual hand-held or other adhesive gun, is prepared for the adhesive injection. This typically includes loading an adhesive cartridge into the adhesive gun and removing the cap from the cartridge. One suitable adhesive is available from the 3M Company under the tradename DP460. A mixing nozzle is attached to the cartridge's nozzle. A preliminary activation of the gun is performed to purge the mixing nozzle of air and unmixed adhesive. This is typically done by dispensing a sufficient amount of material from the mixing tube until is yields a uniform color and viscosity. Also during tool preparation at process block 410, a flame treatment torch is prepared. Typically, the torch is a MAPP gas torch and the preparation includes screwing a bottle of MAPP gas onto an appropriate torch head. During the inspection at process block 412, both the ID of the composite tube 40 and the OD of the bondable end component 12, 14 are inspected to ensure that there is no dust or other debris or contamination in or on either component. If the composite tube 40 and the bondable end component 12, 14 are free of dust, debris, and contamination, then a flame treatment is performed on each, as represented at process block 414.

Still referring to FIG. 18, during the flame treatment 414 of the bondable end component 12, 14, the MAPP gas torch is ignited and its flame is moved uniformly over the OD of the bondable end component's entire bond area to activate the surface of the bond area to optimize adhesion. The blue portion of the flame should contact the surface of the bond area and the bondable end component 12, 14 is rotated while contacting with the flame to ensure complete coverage. The flame treatment is performed without heating the bondable end component's bond area in excess of 160°F. The flame treatment stage is repeated for the second bondable end component 12, 14, the MAPP gas torch is turned off, and the bondable end components are set aside in a clean area. Table 3 shows various examples of suitable flame treatment times for the bondable end component 12, 14 as a function of its size, represented in terms of its OD in inches.

**TABLE 3**

| Bondable End Component Area Size (OD in inches) | Flame Treatment Time for Bondable End Component's Inserted Section OD (in seconds) |
|---|---|
| 2.0 | 20 ± 5 seconds |
| 2.5 | 20 ± 5 seconds |
| 3.0 | 30 ± 5 seconds |
| 3.5 | 30 ± 5 seconds |
| 4.0 | 40 ± 5 seconds |
| 4.5 | 40 ± 5 seconds |
| 5.0 | 50 ± 5 seconds |

During a flame treatment 414 of the composite tube's 40 end, the MAPP gas torch is reignited and its flame is moved uniformly around the ID of the composite tube's bond area to activate the surface of the bond area to optimize adhesion. Movement of the flame is performed continuously, and typically while rotating, so that the flame does not contact any single area of the composite tube for more than one second to reduce the likelihood of damaging the composite tube. The flame treatment is performed without heating the composite tube's bond area in excess of 140°F while being heated sufficiently to be hot to the touch, typically between 110°F -140°F, which can be measured with a precision thermometer / thermocouple. The flame treatment stage 414 is repeated for the second end of the composite tube 40. Table 4 shows various examples of suitable flame treatment times for the ends of composite tube 40 as a function of its size, represented in terms of its ID in inches.

**TABLE 4**

| Tube Size (ID in inches) | Flame Treatment Time for Tube ID (in seconds) |
|---|---|
| 2.0 | 20 ± 5 seconds |
| 2.5 | 20 ± 5 seconds |
| 3.0 | 30 ± 5 seconds |
| 3.5 | 30 ± 5 seconds |
| 4.0 | 40 ± 5 seconds |
| 4.5 | 40 ± 5 seconds |
| 5.0 | 50 ± 5 seconds |

The flame treatment stage 414 is repeated for the second end of the composite tube. The MAPP gas torch is turned off, and the process advances to the preliminary lubrication stage 404. During the preliminary lubrication stage 404, as represented at process block 416, a thin bead of adhesive is injected around the inside edge of the end of composite tube 40, with the adhesive acting as a lubricant. Using a gloved hand, the adhesive is spread around the ID of the composite tube, in its bond area. Adhesive is spread around this way until the bond area is fully coated to provide full lubrication in the bond area and protect against scratching and dust generation. As represented at process step 418, the bondable end component 12, 14 and the composite tube 40 are transferred to a press-up tool at the workstation. This is done without touching the ID of the composite tube 40 or the OD of the flame-treated bond area of the bondable end component 12, 14. The press-up tool is an industry-standard press-up tool, for example, a driveshaft press, a vertical press, or a lathe. During the pressing stage 406, an initial partial press is performed, as represented at process block 420. This typically includes pressing the bondable end component 12, 14 a small fraction of the way into the end of composite tube 40, such as less than about 1/8 of the way into the tube or far enough for the bondable end component 12, 14 to self-support in the end of composite tube 40. The alignment of the bondable end component 12, 14 is inspected with respect to the composite tube 40 to ensure that the bondable end component is inserting straight and not knocked off center with respect to the composite tube 40. As represented at process block 422, the bondable end component 12, 14 is pressed the remainder of the way into the end of composite tube 40. This typically includes pressing the end component 12, 14 until its shoulder stop or other stop-type structure is fully seated against the end of the composite tube 40.

Referring now to FIG. 19, bonding phase 500 includes an injection stage 502 and a curing stage 504. During injection stage 502, alignment of the bondable end component 12, 14 within the composite tube 40 is confirmed, as represented at process block 506. The bondable end component 12, 14 and composite tube 40 are inspected to ensure that the tube is positioned in a manner that presents the holes of the ports at the end or face of the end component 12, 14 in vertical alignment with each other. As represented at process block 508, active injection of the adhesive is performed. The tip of the mixing nozzle of the adhesive gun is pressed tightly into the lower port of the vertically aligned ports and adhesive is injected into the lower port. Adhesive is injected into the lower port until it begins to bubble out of the upper port. At this point, the tip of the mixing nozzle is held in place without additional adhesive injection for between about 10 seconds to 30 seconds, typically a pause of 15 seconds, to allow any trapped air to escape. Injecting adhesive resumes through the lower port until all of the air is fully purged. A fully purged condition typically corresponds to an absence of any air bubbles through the upper port. As represented at process block 510, any excess adhesive is removed with a cleaner or solvent, such as an acetone-moistened shop towel. A strip of filament tape is placed over the openings of both ports to prevent adhesive leakage from the ports during the curing process or stage 504. As represented at process block 512, the adhesive is cured. Curing can be done in a relatively slower manner at room or ambient temperature, shown at process block 514. Ambient or room temperature curing is done for at least forty-eight hours to ensure a fully cured condition of the adhesive before installing the composite driveshaft assembly 10 into a vehicle. As represented at process block 514, curing can be done in a relatively quicker manner at an elevated temperature, shown at process block 516. Elevated temperature or heated curing is typically done in a large oven or with another heat source. As represented at process blocks 518 and 520, the heat source is activated to begin warming up and the driveshaft assembly 10 or assembly of the end components and the composite shaft 40 is placed in the oven or exposed otherwise exposed to heat from the heat source. This is typically done by preheating the oven or other heat source to 150°F and then placing the assembly 10 into the oven or arranged with respect to the heat source to be heated by it. As represented at process block 522, the assembly 10 is left in the oven or receives heat from the heat source for between 20 minutes to 45 minutes, typically 30 minutes at 150°F, to raise the temperature of the assembly 10 to the curing temperature. At process block 524, the assembly 10 is heated at the curing temperature for an appropriate amount of time, typically 1 hour at a curing temperature of 150°F. As represented at process blocks 526, 528, the oven or other heat source is turned off or the assembly is removed from the oven or heat source exposure and then the assembly 10 is allowed to cool. The cooling typically takes at least 30 minutes at room or ambient temperature.

Many changes and modifications could be made to the invention without departing from the spirit thereof. The scope of these changes will become apparent from the appended claims.

## Claims

1. A system of composite vehicle driveshaft assemblies with different characteristics, each composite vehicle driveshaft including a tube having wound filaments bound together, the system comprising:
a first composite driveshaft assembly having a first driveshaft performance characteristic;
a second composite driveshaft assembly having a second driveshaft performance characteristic;
wherein the first and at least second driveshaft performance characteristics provide first and second vehicle performance characteristics of a vehicle that can selectively receive and use the first and second composite driveshaft assemblies interchangeably.

2. The system of claim 1, wherein the first composite driveshaft assembly defines a first torsional rigidity characteristic and the second composite driveshaft assembly defines a second torsional rigidity characteristic.

3. The system of claim 2, wherein each of the first and second composite driveshaft assemblies further comprises:
a composite tube with a first end and a second end;
a first bondable end component received in the first end of the composite tube;
a first cavity defined between the first bondable end component and the first end of the composite tube;
a first volume of adhesive filling the first cavity and bonding the first bondable end component to the first end of the composite tube; and
a second bondable end component received in the second end of the composite tube;
a second cavity defined between the second bondable end component and the second end of the composite tube; and
a second volume of adhesive filling the second cavity and bonding the second bondable end component to the second end of the composite tube.

4. The system of claim 3, wherein at least one of the first and second composite driveshaft assemblies includes layers with filaments that define different wind angles relative to a longitudinal axis of the at least one of the first and second composite driveshaft assemblies.

5. The system of claim 4, wherein the first and second composite driveshaft assemblies have different exterior appearances providing visually distinguishable characteristics that correspond to the first and second driveshaft performance characteristics.

6. The system of claim 5, wherein the first and second driveshaft assemblies have outer surfaces with different filament wind angles that provide the different exterior appearances.

7. The system of one of claims 1 to 6, wherein the first and second composite driveshaft assemblies are part of a kit that includes at least three composite driveshaft assemblies.

8. The system of one of claims 1 to 7, wherein the first and second driveshaft performance characteristics correspond to first and second values of angle of driveshaft assembly twist when subjected to a common input torque.

9. The system of one of claims 1 to 8, wherein the first and second driveshaft assemblies have corresponding first and second composite tubes with at least one of:
different filament wind angles;
different filament materials; and
different filament wind thicknesses.

10. The system of one of claims 1 to 9, wherein the first and second composite driveshaft assemblies have outer layers with filaments that define different wind angles.

11. A system of composite vehicle driveshaft assemblies with different stiffness characteristics, each composite vehicle driveshaft including a tube having wound filaments bound together with a resin, the system comprising:
a first composite driveshaft assembly having:
a first composite tube with a first stiffness value that corresponds to a first amount of resistance to twist of the first composite tube at a given input torque;
a first pair of end components bonded to ends of the first composite tube;
a second composite driveshaft assembly having:
a second composite tube with a second stiffness value that corresponds to a second amount of resistance to twist of the second composite tube at the given input torque;
a second pair of end components bonded to ends of the second composite tube.

12. The system of claim 11, further comprising at least:
a third composite driveshaft assembly having:
a third composite tube with a third stiffness value that corresponds to a third amount of resistance to twist of the third composite tube at the given input torque;
a third pair of end components bonded to ends of the third composite tube; and
wherein:
each of the first, second, and third pairs of end components are configured to interchangeably mount in a vehicle powertrain to facilitate selectively mounting one of the first, second, and third composite driveshaft assemblies based on an evaluated use condition of the vehicle.

13. The system of claim 12, wherein each of the end components of the first, second, and third pairs of end components bonded to the first, second, and third composite driveshaft assemblies further comprises:
a sleeve inserted into a respective end of the corresponding one of the first, second, and third composite tubes, wherein:
the sleeve includes an outer circumferential surface and a pair of lands extending radially from the outer circumferential surface, with the pair of lands engaging an inner circumferential surface of the respective end of the corresponding one of the first, second, and third composite tubes;
a cavity is defined between the pair of lands, the outer circumferential surface of the sleeve, and the inner circumferential surface of the respective end of the corresponding one of the first, second, and third composite tubes; and
a volume of adhesive fills the cavity and bonds the sleeve to the respective one of the first, second, and third composite tube.

14. The system of claim 13, wherein the sleeve comprises a pair of ports fluidly connected to the cavity.

15. The system of claim 13 or 14, wherein the sleeve defines an exterior and comprises:
a crown at the exterior of the sleeve pair of ports fluidly connected to the cavity; and
a pair of ports fluidly connected to the cavity with the ports defining passages that extend angularly away from each other from the crown toward the outer circumferential surface of the sleeve to direct adhesive into the cavity and purge air from the cavity out of the crown during an adhesive injection procedure.
